# EUROPEAN PATENT APPLICATION

(11) **EP 2 982 450 A1**
(43) Date of publication of application: **10.02.2016**
(21) Application number: 15002022.0
(22) Date of filing: 06.07.2015
(51) Int. Cl.: B09B 3/00, B09C 1/00, A62D 3/00, A62D 3/33, C02F 11/00, C04B 18/00, B09C 1/08, A62D 101/24

(54) **IN-SITU PROCESS FOR STABILIZATION AND SOLIDIFICATION OF CONTAMINATED SOIL INTO COMPOSITE MATERIAL - BUILDING MATERIAL**

(30) Priority: 07.08.2014 SI 201400283
(71) Applicant: Stonex d.o.o., 3230 Sentjur (SI)
(72) Inventor: Urleb, Marjan, 3263 Gorica pri Slivnici (SI); Zapusek, Peter, 3313 Polzela (SI)
(74) Representative: Macek, Gregor

(57) **Abstract**

The method according to the invention provides for in situ treatment of two types of waste, i.e. heterogeneous contaminated material and ash and/or poculants to a final composite-filler with a wide range of applications. This was not made possible by the hitherto known methods. The method comprises preparation of an adequate fraction of the heterogeneous contaminated material by sieving and crushing and mixing of individual components in a mixing device. The mixing is performed in two phases, first, the crushed heterogeneous contaminated material is given into the mixing device, this material functions as an aggregate in the composite, then ash and/or poculants are added until all grains of the aggregate are covered in ash and the dry mixture gets homogenized. To the homogenized dry mixture water is then added, in compliance with the requirement of the recipe. The wet reaction mixture is stirred until complete ash is in contact with water, wherewith the reaction is activated throughout the entire volume of the reaction mixture. In the process of composite formation, the ash and/or the poculants assume the role of a solidifier and stabilizer. Due to a high pH value of the mixture which reaches the values above 12.0, the salts of heavy metals get converted into a water insoluble form and are not leached out, thus the final composite is inert.

## Description

The object of the invention is an in situ method for stabilization and solidification of contaminated soil, earth excavations, waste mineral raw materials, mixtures of soil and construction waste, sludge, biodegradable sludge and other free-flowing mineral substances contaminated with heavy metals of heterogeneous mineral composition, any granularity and any humidity (hereinafter **heterogeneous contaminated material**) into a final composite with uniaxial compressive strength exceeding 4 MPa that has inert character and can be considered as construction material.

### Description of the Problem Solved by the Invention

Contaminated soil is a serious threat to the health of people, animals and plants. The soil on industrial areas is often heavily contaminated with heavy metals, usually exceeding maximum allowed quantities by several 10-times or even by several 100-times. A typical example of a terrain that is extremely degraded and useless is the area of Stara Cinkarna (old zinc factory) in Celje. Until 1970, a zinc smelter and zinc roasting plant operated in the area of the old Cinkarna. There were also other manufacturing plants such as non-ferrous metal industry and chemical industry. After all buildings were demolished, the area in question today represents a building site filled with materials and waste of a very heterogeneous character as a result from active local industry in the past and deposition of huge quantities of industrial, constructional and other waste of unknown origin. This means that the entire area in question is an area of heavily contaminated ground, in which heavily contaminated heterogeneous contaminated material is present.

In 2009, the Municipality of Celje as the principal had this area of the Cinkarna Celje partly laid with planned infrastructure - two legs of sewerage in direction north-south between the Kidriceva cesta street and Voglajna. Some 13,605.73 m3 of contaminated excavations, i.e. heterogeneous contaminated material resulted from construction.

Several analyses of the soil have been carried out. Today, the latest research have shown that the excavated materials from the mentioned construction that are currently still present on the building site are a hazardous construction waste under classification number 17 05 05* - Dredging spoil containing hazardous substances. Table 1 represents values of inorganic parameters in the treated contaminated soil.

One of the main problems posed by the degraded area contaminated with heavy metals is penetration of precipitation through contaminated soil layers and washout of heavy metal ions and other contaminants into underground water and related waterways. A further problem is also air emissions since contaminated soil gets spread into the atmosphere in the form of tiny dust particles due to wind and other weather influences, especially when dry weather conditions and strong wind are combined. Dust particles containing heavy metals can be found up to several tens of kilometres away from the source location. Both leaching of heavy metals into underground water and waterways and wind erosion of contaminated dust into the atmosphere cause a risk for the direct location and for wider environment.

Through soil contamination degraded area is technologically and financially very difficult to reinstate into a situation that is adequate for living and other urban use. That's why remediation of such areas is postponed to a future time even in developed and rich countries.

### Prior Art

A selection of a technology or a method for remediation of a contaminated site primarily depends on risk assessment of the pollution for people and the environment, on properties, concentration, access to and mobility of contaminants, properties of the ground or soil, current and anticipated use of a site as well as financial and technical assets. Before remediation of a site is in full swing, the efficiency of a technology or a method is normally verified with respect to set goals with preliminary laboratory and pilot studies. The ultimate goal is reduction in pollution risk for people and the environment, whereas concrete goals of remediation are designed with respect to the results of preliminary studies and also with respect to legislative requirements and measurement results known by experts from the field and confirmed as adequate for the risk assessment.

A soil contaminated with heavy metals is for instance remedied in compliance with the prior art in the following ways:
1.) Methods for stabilization, with which solubility and mobility of heavy metals is reduced, wherewith the deposition is reduced:
   - increasing soil pH by adding lime (liming)
   - adding adsorbents (such as clay) and insoluble salts (such as phosphates),
   - vitrification (soil vitrification as a result of high temperatures), stabilization with hydraulic binders (cement, ashes, etc.).
2.) Methods, with which heavy metals are removed from the soil:
   - separation and removal of tiny fractions from the soil (for instance with flotation or hydrocyclonic separation) since these are often more heavily contaminated with heavy metals,
   - phytoextraction, this is removing of heavy metals from soil with plants,
   - washing of soil with salt solutions, detergents, acids or metallic ligands. Washing is carried out in a closed-cycle technology, where drained solution is reused.
3.) Transport of excavated contaminated soil to a special waste landfill. There is no such landfill in Slovenia.

Solidification and stabilization S/S is a method for reducing mobility of waste. The waste is mixed with other materials in order to obtain a solid material suitable for further use.

The methods for stabilization and simultaneous solidification of heterogeneous contaminated material are an established technology for remediation of degraded areas (Wuana and Okieimen, 2011; USEPA, 1998; USEPA, 1992; USEPA, 1997; Martin and Ruby, 2004). These methods are used for a variety of contaminated materials, such as waste, mud, sediments and soils, especially those predominantly contaminated with heavy metals. In the described methods for stabilization and solidification to the contaminated material chemically reactive formulations of materials are added that stabilize the contaminants by precipitating, adsorbing, absorbing, complexing, encapsulating or immobilizing them in any other way. Addition of chemically reactive formulations of materials at the same time solidifies bulk, flowing or semi-flowing contaminated materials. The method for stabilization and solidification results in a solid material, in which washout of contaminants is reduced and the contaminants are therefore less hazardous for the environment. Chemically reactive formulations of materials that are most frequently used for stabilization and solidification are hydraulic binders, especially various poculants such as cement, ashes etc. The above mentioned papers relating to in situ methods for stabilization and solidification mention only mixing of contaminated soil with chemically reactive formulations of said materials by way of helical screws, rotary cutters arranged on an excavator arm, or by way of injection. The mentioned methods are therefore only suitable for treating a shallow segment of contaminated soil when only the surface is contaminated. Such methods do not provide for uniform and complete mixing and no adequate cleaning of contamination and immobilization of heavy metals deeper in the contaminated soil is possible. Further, the mentioned methods are not suitable for heterogeneous contaminated materials having a heterogeneous granular structure and where contamination is presented deeper in the contaminated soil. Homogenization of the material and consequently adequate cleaning with the proposed methods are not possible.

Patent No. US RE 38,238 (August 26, 2003) discloses a use of alkaline agents for the stabilization of biodegradable sludge in order to eliminate the activity of pathogenic organisms.

Patent No. US 5,277,826 (January 11, 1994) discloses a use of fly ash that is added to a biodegradable sludge. The ash reacts exothermically; the released heat increases the temperature of the mixture up to 70 °C and maintains it for up to 30 minutes. pH value of the fly ash-sludge mixture exceeds 12 in a period of up to 2 hours. The obtained product is suitable as a sanitary mulch for non-hazardous waste landfills.

Patent No. US 4,539,121 (January 18, 1984) discloses stabilization of bay mud sludge by adding blast furnace slag.

Patent No. Si 22951 A (January 23, 2009) discloses continuous stabilization of biodegradable mud by adding ash, and use of the final product for the preparation of construction composite materials.

### Description of the Invention

Based on the available data the applicant is not aware of any existing method that would provide for in situ material processing of heterogeneous contaminated material having heterogeneous granulated structure into a final composite that would meet the characteristics for a construction product. Heterogeneity of the contaminated material does not pose a problem for the method according to the invention. Remediation of such heterogeneous material according to the presently known methods was impossible. Namely, the heterogeneous granular structure comprising granule sizes from several µm up to several dm does not provide for adequate density of the final composite. The final composite thus lacks adequately low permeability which is an additional guarantee that the final composite will be inert. Granularity in the range of 10⁻¹m and more is inadequate for mixing as there are no mixing technologies suitable for it.

The invention provides for in situ remediation of heterogeneous contaminated material, most often contaminated soil, even in depth and not only of the superficial segment of the contaminated soil by employing adequate homogenization of the heterogeneous contaminated material, to which additional material is added later in the process, such as ash and/or poculants, preferably electrofilter ash, and water, with which a final composite having a wide range of application is obtained. The poculants may be for example cement, lime, micro silica, porcelains, slag, natural and artificial fibres, vermiculite or diatomaceous earth. The method according to the invention is carried out in situ, so a need for transportation of hazardous waste to a special waste landfill or for transportation to a temporary landfill of a treatment plant is eliminated.

The above mentioned technical problem is solved by the in situ method according to the invention which is explained in more detail in the continuation and with embodiments. The result of the method according to the invention is a final composite having the characteristics of a construction material; it is inert and therefore non-hazardous for the environment. Various mechanical properties of the final composite are achieved by using various recipes.

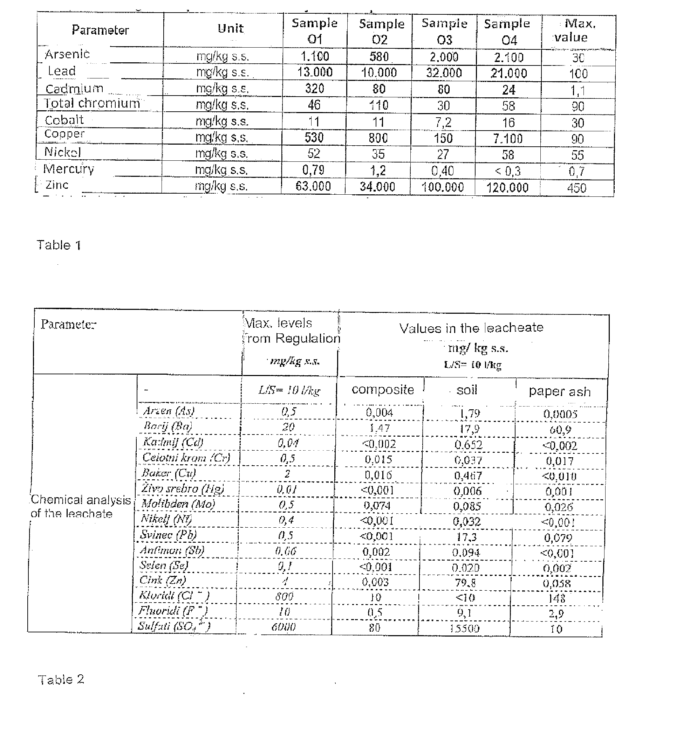

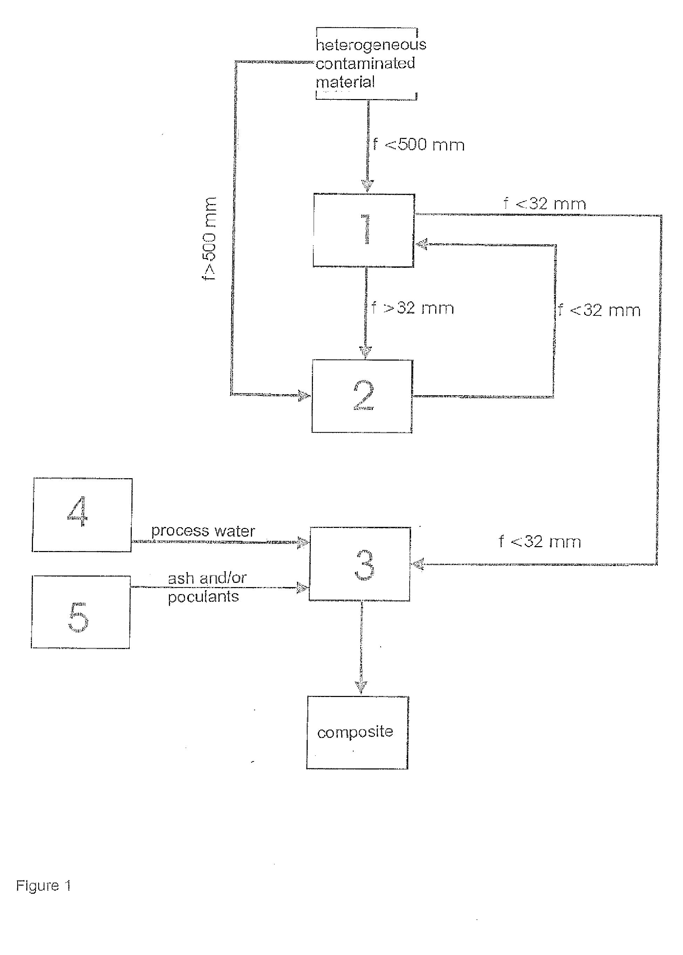

Figure 1 represents the in situ method according to the invention

The method according to the invention is a batch method. Before defining an adequate recipe adequate laboratory tests need to be carried out. First, a starting analysis is used to assess the type of contaminants, the contamination level and the humidity of the contaminated material. The obtained results are then used in laboratory tests to define an adequate recipe for the remediation of the material: which additional material and in what quantity would be used and the quantity of added water. Every additional material is not suitable for all types of contamination. If contamination with chromium is in question, ash does not yield optimal results and this is why ash is combined with lime and Portland cement. Inertness of the final composite and its uniaxial compressive strength depend on the type and level of contamination, on a fraction, i.e. on granule size in the heterogeneous contaminated material, and on additional materials and water that are added to the heterogeneous contaminated material during the method according to the invention.

A prerequisite for the inertness of the obtained final composite is that pH of the wet reaction mixture exceeds 12. The term wet reaction mixture refers to a mixture of all components, namely heterogeneous contaminated material, additional materials and water. pH is adjusted by adding ash and/or poculants. If a too small quantity of added ash and/or poculants is added, pH in the wet reaction mixture does not reach 12 and the salts of heavy metals are not converted into a water insoluble form. The heavy metals are still mobile and the final composite is not inert.

The added quantity of ash and/or poculants and water, depending on the quantity of the starting heterogeneous contaminated material, influences also the uniaxial compressive strength of the final composite. The strength is determined on the basis of the Proctor test, i.e. the Proctor curve of optimal moisture. The Proctor test is used to assess the optimal moisture of the final composite where the composite exhibits the highest density. The density of the final composite provides the composite with low permeability and is an additional guarantee that the final composite will be inert. Optimal moisture enables a reaction process, namely the conversion of the salts of heavy metals to a water insoluble form, throughout the entire volume of the wet reaction mixture. The Proctor test is used in laboratory experiments to determine the actual quantity of water for each heterogeneous contaminated material that will be added during the process in order to obtain an adequate final composite.

When water is added, an exothermic chemical reaction or hydration of earth-alkaline and metallic oxides, such as CaO, MgO, Fe₂O₃, which are present in the ash and/or poculants is triggered. Due to hydration of earth-alkaline and metallic oxides pH increases, the reaction is exothermic and heat is released. Increased pH level causes the salts of heavy metals to convert into water insoluble form and do not get leached out. A general formula for the triggered chemical reaction is as follows: Me⁺ⁿ + nOH^{-⇒} Me(OH)+E_{HEAT}.
The increase in pH and the increase of reaction mixture temperature depend on the ratio between heterogeneous contaminated material/ash and/or poculants.

Once the recipe is defined on the basis of laboratory experiments, an adequate fraction of the heterogeneous contaminated material to be treated into a final composite is prepared. An adequate fraction is prepared by crushing and sieving. An adequate fraction has preferably a granule size f = 0-32 mm, which means that the granules of the heterogeneous contaminated material have a size ranging from 0 to 32 mm. The parts exceeding 500 mm are previously separated by an excavator or charger and guided directly into a crusher 2 where they get crushed, and then guided into a two-fraction sieving device 1. The parts smaller than 500 mm are guided directly into the two-fraction sieving device 1. After the sieving the sieved fraction f > 32 mm is guided into the crusher 2, where it is crushed and returned to the sieving device 1. By crushing and sieving a fraction of heterogeneous contaminated material having a granule size of f = 0-32 mm is obtained. This is an aggregate that is then guided to a mixing device 3. The granule size in the fraction 0-32 mm is still adequate for a majority of mixing drums where the next phase of the method is performed. The costs of crushing are acceptable and the final composite can still further be thickened in order to keep permeability at the lowest level possible.

The aggregate is then mixed with ash and/or poculants, which are in a powder form, in the mixing device 3 which can also be a concrete factory. The best mixing quality is achieved if planetary mixing drums intended for mixing pastes or bentonite waste waters are used.

The mixing is performed in two phases: first, the dry mixture is homogenized, this means that the aggregate and the ash and/or the poculants are homogenized, then water is added and the wet mixture or rather the wet reaction mixture is homogenized up to desired consistency or until the final density of the composite is reached, the density being determined by the Proctor curve.

First, the aggregate is added to the mixing device 3 from the two-fraction sieving device 1. While constantly stirring, ash and/or poculants are added according to the previously determined recipe from a storage silo 5. The dry mixture is stirred until all granules of the aggregate are covered in ash and/or poculant and the dry mixture gets homogenized. Since the ash and/or the poculants are hygroscopic and the granules of the aggregate have a certain moisture content, the ash and/or the poculants rapidly cover the granules of the aggregate and homogenization is completed within two minutes of intense stirring.

The ratio by weight of the heterogeneous contaminated material (HCM) and the ash and/or the poculants (P) is in the range of HCM:P = 1:1 to 9:1. Which ratio is used depends on the fraction used, on the contamination level of the heterogeneous contaminated material and of course on the desired uniaxial compressive strength of the obtained final composite. A fraction having coarse granules with a small quantity of granule sizes below 1 mm needs more ash and/or poculants in order to achieve adequate compaction. Ratios by weight HCM:P, wherein: HCM = 1 and P>1 are not rational since no higher uniaxial compressive strength and immobility of heavy metals are achieved. The mentioned fact was tested by laboratory tests. Ratios by weight HCM : P, wherein: HCM > 9 and P=1 do not provide desired results as the quantity of added ash and/or poculants is too low for to subsequently achieve the prescribed pH level and to cause that all granules of the aggregate would get covered in ash and/or poculant.

In the second phase of mixing during continuous stirring water from a tank or a hydrant 4 is added to the homogenized dry mixture in the mixing device 3, in compliance with the recipe requirement.

To the dry mixture as much water as needed for a start of a reaction throughout the entire volume of the reaction mixture is added and which has been previously determined by laboratory tests. If water drips out from the final composite, this means that too much water was added. If there are individual clumps of ash and/or poculants in the composite, this means there is a lack of water in the final composite. A recipe that has been previously defined in a laboratory and takes the natural moisture of HCM into account is a reliable basis for the in situ method according to the invention. Subsequent adjustments are not needed.

The quantity of added water ranges between 18 % by weight and 35 % by weight depending on the total quantity of the homogenized dry mixture. It depends on the natural or input moisture of the heterogeneous contaminated material and on the sieving curve of the heterogeneous contaminated material. It is determined on the basis of the Proctor test, i.e. the Proctor curve of optimal moisture. Optimal moisture enables a reaction course throughout the entire volume of the wet reaction mixture without any dripping of the excess water from the final composite.

The wet reaction mixture is stirred until complete ash and/or all poculants are in contact with water, wherewith the reaction is activated throughout the entire volume of the reaction mixture. The recipe of the final composite is previously determined in the laboratory and a reaction takes place only when the entire mixture is wetted which is demonstrated by the colour of the mixture. The mixture becomes lighter and ductile. The wetted mixture without any powder inserts and clumps is suitable for construction and was tested by previously conducted laboratory tests. In the process of composite formation, the ash and/or the poculants assume the role of a solidifier and stabilizer. Due to a high pH value of the wet reaction mixture which reaches the values of at least 12, the salts of heavy metals get converted into a water insoluble form and are not leached out, thus the final composite is inert. The temperature of the exothermic reaction does not exceed 50°C.

After the second phase of stirring is completed, a final composite is obtained - a filler of desired consistency. When the final composite dries, at that time the reaction is also completed and the composite gets characteristics similar to those of a concrete. A key advantage of the method according to the invention is in the conversion of two types of waste: heterogeneous contaminated material and ash or ash and/or poculants into a final composite - filler having a wide range of applications.

The invention will be described in the continuation by way of embodiments.

### Embodiments

The embodiments refer to the project of remediation of the area of the old Cinkarna Celje, where 13,605 m3 of excavated earth were processed. All embodiments were carried out by the method according to the invention. A fraction of the heterogeneous contaminated material was f=0-32 mm. Results of a chemical analysis of the leachates of the final composite obtained according to the presented embodiments, of contaminated soil and of paper ash are given in Table 2. Based on initial analyses the following recipes were determined:

### Example 1

Weight ratio:
heterogeneous contaminated material : electrofilter ash of paper sludge = 1 : 1

| | |
|---|---|
| Heterogeneous contaminated material with 14 % moisture content | 43.10 % |
| Electrofilter ash of paper sludge of 0% moisture content | 43.10 % |
| Quantity of added water | 13.80 % |

The final composite contains 19.1 % of moisture content with tolerance +/- 2 %. Its specific weight amounts to 1.89 t/m3.

### Example 2

Weight ratio:
heterogeneous contaminated material: electrofilter ash of paper sludge = 1:1

| | |
|---|---|
| Heterogeneous contaminated material with 14 % moisture content | 39.58 % |
| Electrofilter ash of paper sludge of 0 % moisture content | 39.58 % |
| Quantity of added water | 20.84 % |

The final composite contains 25.70 % of moisture content with tolerance +/- 2 %. Its specific weight amounts to 1.78 t/m3.

### Example 3

Weight ratio:
heterogeneous contaminated material : electrofilter ash of paper sludge = 3 : 1

| | |
|---|---|
| Heterogeneous contaminated material with 14 % moisture current | 58.98 % |
| Electrofilter ash of paper sludge of 0 % moisture content | 19.66 % |
| Quantity of added water | 21.35 % |

The final composite contains 28.60 % of moisture content with tolerance +/- 2 %. Its specific weight amounts to 1.87 t/m3.

## Claims

1. A method for in situ stabilization and solidification of contaminated soil to a composite, wherein the contaminated soil is a heterogeneous contaminated material, **characterized in that** it includes
- initial analysis for determining a type of contaminants, a level of contamination and humidity of the heterogeneous contaminated material, wherein the heterogeneous contaminated material includes earth excavations, waste mineral raw material, mixtures of soil and construction waste, sludge, biodegradable sludge and other free-flowing mineral substances contaminated with heavy metals and having heterogeneous mineral composition of any granularity and any humidity;
- preparation of an adequate fraction of the heterogeneous contaminated material, which represents an aggregate, by crushing and sieving;
- mixing the aggregate with ash and/or poculants in a mixing device, wherein the aggregate and the ash and/or poculants are first homogenized, this is homogenization of a dry mixture, in order for all granules of the aggregate to get covered in ash and/or poculant;
- adding water and homogenization of a wet reaction mixture, wherein the wet reaction mixture is stirred until complete ash and/or all poculants are in contact with water, wherewith the reaction is activated throughout an entire volume of the wet reaction mixture;
- stirring until desired consistency or compactness of a final composite is achieved.

2. Method according to claim 1, **characterized in that** the ash is electrofilter ash and the poculants are cement, lime, micro silica, porcelains, slags, natural and artificial fibres, vermiculite, diatomaceous earth.

3. Method according to preceding claims, **characterized in that** the fraction of the heterogeneous contaminated material is f = 0-32 mm.

4. Method according to preceding claims, **characterized in that** the ratio by weight of the heterogeneous contaminated material (HCM) and ash and/or poculants (P) is in the range HCM:P = 1:1 to 9:1.

5. Method according to preceding claims, **characterized in that** the water content is between 18 % by weight and 35 % by weight depending on the total quantity of the homogenized dry mixture and is determined on the basis of a Proctor curve of optimal moisture.

6. Method according to preceding claims, **characterized in that** the pH of the wet reaction mixture is 12 or more and the temperature does not exceed 50°C.

7. Method according to preceding claims, **characterized in that** the parts exceeding 500 mm are previously removed by an excavator or a loading machine and are guided directly to a crusher (2), where they are crushed and then guided to a two-fraction sieving device (1); the parts smaller than 500 mm are guided directly into the two-fraction sieving device (1); after the sieving step the sieved fraction f > 32 mm is guided into the crusher (2), where it is crushed and returned to the sieving device (1) wherein a fraction of the heterogeneous contaminated material with a granule size f = 0-32 mm is obtained and represents the aggregate which is then guided to a mixing device (3); then follows mixing of the aggregate with ash and/or poculants in the mixing device (3), wherein the aggregate is first added into the mixing device (3) from the two-fraction sieving device (1) and while constantly stirring, ash and/or poculants are added from a storage silo (5); the dry mixture is stirred until all granules of the aggregate get covered in ash and/or proculant and the dry mixture gets homogenized; in the second mixing phase, while constantly stirring, water is added to the homogenized dry mixture into the mixing device (3) from a tank or hydrant (4), wherein the wet reaction mixture is stirred until the entire ash and/or all poculants are in contact with water; the reaction throughout the entire volume of the wet reaction mixture is thus activated which is demonstrated by the change in the colour of the wet reaction mixture.
